Europäisches Patentamt

European Patent Office

Office européen des brevets

(19)

(11) Veröffentlichungsnummer : **0 671 127 A1**

# (12) EUROPÄISCHE PATENTANMELDUNG

(21) Anmeldenummer : 95103374.5

(51) Int. Cl.⁶ : **A23L 1/318**

(22) Anmeldetag : **09.03.95**

(30) Priorität : 11.03.94 DE 4408376
21.02.95 DE 19505890

(43) Veröffentlichungstag der Anmeldung :
**13.09.95 Patentblatt 95/37**

(84) Benannte Vertragsstaaten :
**AT BE DE DK NL**

(71) Anmelder : **Wiesenhof Geflügel-Kontor GmbH
Heide 59
D-49429 Visbek (DE)**

(72) Erfinder : **Wesjohann, Paul-Heinz
Dorfstrasse 26
D-49429 Visbek/Rechterfeld (DE)**

(74) Vertreter : **Dipl.-Ing. H. Hauck Dipl.-Ing. E.
Graalfs Dipl.-Ing. W. Wehnert Dr.-Ing. W.
Döring
Postfach 30 24 30
D-20308 Hamburg (DE)**

(54) **Einspritzen einer Öl-in-Wasser-Emulsion in Hähnchen als Vorbereitung zum Garvorgang.**

(57) Hähnchen, das in gekühltem Zustand durch ein injektiertes Gemisch aus Wasser und Speiseöl für einen Garvorgang vorbereitet ist, wobei das Gemisch ein bei Kühltemperatur des Hähnchens flüssiges Speiseöl enthält und etwa mit Kühltemperatur mittels eines Injektors mit einem Nadelbett von oben durch die Haut in das Brustfleisch und gegebenenfalls weitere Partien des auf dem Rücken liegenden Hähnchens injektiert ist.

EP 0 671 127 A1

Gegenstand der Erfindung ist ein für einen Garvorgang vorbereitetes Hähnchen sowie ein Verfahren zum Vorbereiten eines Hähnchens für einen Garvorgang nach den Oberbegriffen der Ansprüche 1 und 15.

Die herkömmliche Vorbereitung von Hähnchen für einen Grill-, Brat- oder dgl. Garprozeß umfaßt das Würzen mit einer Mischung aus Salz, Paprika und evtl. anderen Gewürzen in einer Würztrommel. Im gegarten Zustand ist das Hähnchenfleisch zumeist trocken, strohig und faserig. Das gilt insbesondere für das Brustfleisch.

Aus der DE 19 13 075 A ist eine verbesserte Zusammensetzung und eine Methode zur Behandlung von Fleischstücken, speziell Geflügel, bekannt, durch die deren Verzehrqualitäten und dabei auch der Geschmack, die Saftigkeit, die Zartheit und der Fettgehalt verbessert werden sollen. Die Zusammensetzung ist eine aus einem Wasseranteil und einem Ölanteil gebildete Emulsion, deren Ölanteil so ausgewählt ist, daß der Schmelzpunkt im Bereich von 24,4 bis 43 °C liegt und ein kurzer plastischer Bereich vorhanden ist. Vorzugsweise besteht der Ölanteil aus Kokosnuß- und/oder Palmkernöl. Das Fleisch oder Geflügel wird gekühlt und die Emulsion wird geschmolzen, d.h. bei einer Temperatur oberhalb des Schmelzpunktes des Öles, in das Fasergewebe des Fleischstückes eingeführt. Das Material kann mittels Hohlnadeln eingebracht werden, die durch die Haut des Vogels geführt werden, wobei die Injektion der Zusammensetzung an mehreren Stellen einschließlich wenigstens zwei Stellen an jedem Bruststück erfolgt. Vorzugsweise wird die Injektion unter Drücken zwischen 2,11 bis 4,22 kg/cm$^2$ vorgenommen, so daß sich die Ölzusammensetzung weiter in den Gewebefasern verteilt und weniger durch die Injektionsstelle entweichen kann. Bevorzugt wird eine Technik für die Injektion bei Geflügel verwendet, bei der die Zusammensetzung durch die ganze Länge beider Brustteile eines Vogels mittels Injektion von außen durch einen einzigen Längskanal in jedem Bruststück verteilt wird. Dies wird durch Verwendung von Hohlnadeln vorgenommen, die sich parallel und eng an der Skelettstruktur des Brustteils eines Tieres von entweder den inneren oder hinteren Eingeweideschnitten erstrecken. Diese Technik schließt üblicherweise das Einführen von relativ langen Nadeln, die eine Anzahl von Öffnungen in Abständen entlang ihrer Länge aufweisen, durch die schmalen Fleischflächen, die normalerweise an den Eingeweideöffnungen des Tieres freiliegen, ein.

Diese Behandlungstechnik hat insbesondere den Nachteil, daß die Emulsion dem gekühlten Fleisch mit einer Temperatur zugeführt wird, die weit oberhalb der Kühltemperatur liegt. Hierdurch wird im Fleisch ein Keimwachstum gefördert, das in kurzer Zeit zu dessen bakteriologischem Verderb führen wird. Ein solchermaßen vorbereitetes Fleischstück darf nach lebensmittelrechtlichen Vorschriften nicht gehandelt werden, sondern ist direkt zu garen und zu verzehren. Das Injizieren unter hohem Druck in Richtung der Fleischfaser ist vor allem auf verhältnismäßig kräftiges Truthahnfleisch ausgerichtet. Das weichere Hähnchenfleisch würde jedoch bei dieser Injektiertechnik verletzt werden, insbesondere würden die Fleischfasern aufgerissen. Überdies wäre die fette Rezeptur mit hohem Ölanteil für mageres Truthahnfleisch für die Vorbereitung von Grill-Hähnchen geschmacklich ungeeignet.

Davon ausgehend liegt der Erfindung die Aufgabe zugrunde, ein Hähnchen und ein Verfahren der eingangs genannten Art zu schaffen, daß so vorbereitet ist bzw. vorbereitet, daß die Qualität des Fleisches vor und nach dem Garen verbessert ist.

Die Lösung dieser Aufgabe ist in den Ansprüchen 1 und 15 angegeben. Vorteilhafte Ausgestaltungen sind in den Unteransprüchen enthalten.

Erfindungsgemäß wird in das Hähnchen ein Gemisch oder eine Marinade aus Wasser und Speiseöl injiziert, um eine gleichmäßige Verteilung und Dosierung von Wasser und Speiseöl zu bekommen. Vorzugsweise ist das Gemisch eine Emulsion, die unter Zugabe eines Emulgators gebildet wird. Das Speiseöl ist ein bei Kühltemperatur des Hähnchen flüssiges Öl. Hierbei kann es sich um ein Sojaöl, Sonnenblumenöl oder Olivenöl handeln, welches bei typischen Kühltemperaturen von etwa 5 °C flüssig ist. Das Gemisch wird etwa bei Kühltemperatur des Hähnchen in dieses injiziert, wodurch eine bedenkliche Erhöhung der Keimzahlen und bakteriologischer Verderb vermieden werden.

Das Speiseöl kann im Hähnchen seinen flüssigen Zustand beibehalten. Dies ist der Normalfall, weil das Hähnchen meist auf konstanter Kühltemperatur gehalten wird. Dennoch tritt das Speiseöl nicht in nennenswertem Umfange aus dem Hähnchen aus. Es wird nämlich mittels eines Injektors mit Nadelbett injiziert, der von oben durch die Haut in das Brustfleisch des auf dem Rücken liegenden Hähnchen gestochen wird. Somit wird die Marinade durch die Haut quer zur Fleischfaser eingebracht. Durch das Nadelbett wird sie so fein verteilt, daß keine "Marinadennester" entstehen und die Fleischfasern nicht zerstört werden. Die dünnen Nadeln des Nadelbettes verursachen nur sehr kleine Einstichöffnungen, durch die die feinverteilte Flüssigkeit praktisch nicht nach außen treten kann. Die Haut des Hähnchens bildet vielmehr für die Marinade eine im wesentlichen undurchlässige Sperrschicht.

Das eingespritzte Wasser gleicht einen Wasserverlust beim Braten, Grillen oder dgl. aus, so daß das Fleisch im gegarten Zustand saftig ist. Das eingegebene Speiseöl sorgt dafür, daß das Fleisch zart ist. In Übereinstimmung mit den lebensmittelrechtlichen Vorschriften erlaubt die Behandlungstechnik eine längere Lagerung und den Handel der vorbereiteten Hähnchen. Infolge der Injektiertechnik verlieren diese praktisch keine Emulsion, so daß sie sich vor dem Garen äußerlich von herkömmlichen Hähnchen kaum unterscheiden und das Ergebnis des Garprozesses durch das Marinieren exakt gesteuert werden kann. Vor allem ganze oder halbe Hähnchen mit Haut und Knochen werden in der beschriebenen Weise mariniert. Außer dem Brustfleisch können auch andere Hähnchenteile wie Schenkel oder Flügel einer entsprechenden Behandlung unterzogen werden. Eine Anwendung auf artverwandtes Fleisch ist in die Erfindung einbezogen.

Für eine Feinverteilung der Emulsion kann das Nadelbett 50 bis 200, vorzugsweise etwa 120 Nadeln aufweisen. Ferner kann die Feinverteilung durch mehrfaches Einstechen, z.B. 3- bis 4-faches Einstechen, des Nadelbetts gefördert werden. Dabei kann der Nadelabstand etwa 1 cm betragen. Vorzugsweise wird die Emulsion mit einem niedrigen Druck injiziert, der etwa 0,8 bis 1,2 bar betragen kann.

Mit der Emulsion kann Speisesalz zugegeben werden. Das Speisesalz fördert, daß Eiweiß in Lösung geht und hähncheneigenes oder eingespritztes Wasser an das Hähnchenfleisch bindet. Ein bevorzugtes Gemisch enthält etwa 85 Gew.-% Wasser, 12 Gew.-% Speiseöl, 2,5 Gew.-% Speisesalz und 0,5 Gew.-% Emulgator. Es hat sich als vorteilhaft erwiesen, wenn das Hähnchen insgesamt etwa 15 Gew.-% Gemisch enthält.

Das Hähnchen kann mit einem Oberflächen-Sichtgewürz getumbelt sein, welches bevorzugt aus Paprika und evtl. anderen Gewürzen besteht. Dem Sichtgewürz kann Speisesalz beigegeben sein, auch wenn das Gemisch einen Speisesalzanteil enthält. Bevorzugt wird das Hähnchen vor dem Injizieren der Marinade im Tumbler behandelt. Ein Tumbeln nach dem Injizieren würde hingegen zu einem Aufschlagen des Muskelfleisches und Aufschluß von Eiweiß führen. In Lösung gegangenes Eiweiß tritt beim Grillen durch die Afteröffnung aus und fließt durch das Rotieren fast vollständig um das Hähnchen herum. Durch die hohe Grilltemperatur verbranntes Eiweiß hinterläßt einen unansehnlichen dunklen Streifen auf der Haut, der nicht der Verbrauchererwartung entspricht.

Schließlich kann das einzuspritzende Gemisch einen Anteil Maltodextrine oder dgl. Kohlehydrate enthalten. Dabei handelt es sich um einen Zuckerstoff, der eine weitere Wasserbindung im Hähnchenfleisch, vor allem aber einen Bräunungseffekt beim Grillen des Hähnchens bewirkt. Hohe Grilltemperaturen können jedoch die gewünschte Bräunung des Hähnchens ohne Maltodextrine-Zusatz der Marinade bewirken.

In einem bevorzugten Ausführungsbeispiel wird folgendermaßen vorgegangen:

Mittels eines Tumblers werden auf Hähnchen einer vorher festgelegten Gewichtskalibrierung ein Oberflächen-Sichtgewürz mit Paprika und eventuell weiteren Gewürzen sowie ein Teil des Salzes aufgetragen. In die getumbelten Hähnchen wird mittels eines Pökelinjektors mit 120 Nadeln unter einem Druck von 1,2 bar durch ca. 3- bis 4-faches Einstechen des Nadelbettes eine Emulsion gespritzt, so daß die Gewichtszunahme ca. 15 Gew.-% beträgt. Die Emulsion enthält (in Gew.-%):

| Wasser | 85 % |
|---|---|
| Sojaöl | 12 % |
| Speisesalz | 2,5 % |
| Emulgator (E 472 b+c) | 0,5 % |
| | 100,0 % |

E 472 b : Mono- und Diglyceride von Speisefettsäuren verestert mit Milchsäure

E 472 c : Mono- und Diglyceride von Speisefettsäuren verestert mit Zitronensäure

Die Herstellung der Emulsion erfolgt auf mechanischem Wege. Das vorbereitete Hähnchen wird vorzugsweise gegrillt.

## Patentansprüche

1. Hähnchen, das in gekühltem Zustand durch ein injiziertes Gemisch aus Wasser und Speiseöl für einen Garvorgang vorbereitet ist, dadurch gekennzeichnet, daß das Gemisch ein bei Kühltemperatur des Hähnchens flüssiges Speiseöl enthält und etwa mit Kühltemperatur mittels eines Injektors mit einem Nadelbett von oben durch die Haut in das Brustfleisch und gegebenenfalls weitere Partien des auf dem Rücken liegenden Hähnchens injiziert ist.

2. Hähnchen nach Anspruch 1, dadurch gekennzeichnet, daß das injizierte Gemisch ein Sojaöl, Sonnenblumenöl oder Olivenöl enthält.

3. Hähnchen nach Anspruch 1 oder 2, dadurch gekennzeichnet, daß das injektierte Gemisch eine Emulsion ist.

4. Hähnchen nach Anspruch 3, dadurch gekennzeichnet, daß die injektierte Emulsion einen Emulgator enthält.

5. Hähnchen nach einem der Ansprüche 1 bis 4, dadurch gekennzeichnet, daß das Gemisch bei etwa 5 °C injektiert ist.

6. Hähnchen nach einem der Ansprüche 1 bis 5, dadurch gekennzeichnet, daß das Gemisch mit einem Druck von etwa 0,8 bis 1,2 bar injektiert ist.

7. Hähnchen nach einem der Ansprüche 1 bis 6, dadurch gekennzeichnet, daß das Gemisch mittels eines Nadelbetts mit 50 bis 200, vorzugsweise 120 Nadeln injektiert ist.

8. Hähnchen nach einem der Ansprüche 1 bis 7, dadurch gekennzeichnet, daß das Gemisch mittels eines mehrfach eingestochenen, vorzugsweise drei- bis viermal eingestochenen Nadelbetts injektiert ist.

9. Hähnchen nach einem der Ansprüche 1 bis 8, dadurch gekennzeichnet, daß das injektierte Gemisch ein Speisesalz enthält.

10. Hähnchen nach einem der Ansprüche 1 bis 9, dadurch gekennzeichnet, daß das injektierte Gemisch etwa 85 Gew.-% Wasser, 12 Gew.-% Speiseöl, 2,5 Gew.-% Speisesalz und 0,5 Gew.-% Emulgator enthält.

11. Hähnchen nach einem der Ansprüche 1 bis 10, dadurch gekennzeichnet, daß es etwa 15 Gew.-% Gemisch enthält.

12. Hähnchen nach einem der Ansprüche 1 bis 11, dadurch gekennzeichnet, daß es mit einem Oberflächen-Sichtgewürz getumbelt ist.

13. Hähnchen nach Anspruch 12, dadurch gekennzeichnet, daß es vor dem Injektieren des Gemisch mit einem Oberflächen-Sichtgewürz getumbelt ist.

14. Hähnchen nach einem der Ansprüche 12 oder 13, dadurch gekennzeichnet, daß es mit Speisesalz getumbelt ist.

15. Verfahren zum Vorbereiten eines Hähnchens für einen Garvorgang, bei dem das Hähnchen in gekühltem Zustand ein Gemisch aus Wasser und Speiseöl injektiert erhält, dadurch gekennzeichnet, daß das Gemisch ein bei Kühltemperatur des Hähnchens flüssiges Speiseöl enthält und etwa mit Kühltemperatur mittels eines Injektors mit einem Nadelbett von oben durch die Haut in das Brustfleisch und gegebenenfalls weitere Partien des auf dem Rücken liegenden Hähnchens injektiert wird.

16. Verfahren nach Anspruch 15, dadurch gekennzeichnet, daß ein Sojaöl, Sonnenblumenöl oder Olivenöl enthaltendes Gemisch injektiert wird.

17. Verfahren nach Anspruch 15 oder 16, dadurch gekennzeichnet, daß ein emulgiertes Gemisch injektiert wird.

18. Verfahren nach Anspruch 17, dadurch gekennzeichnet, daß das Gemisch mit Hilfe eines Emulgators emulgiert wird.

19. Verfahren nach einem der Ansprüche 15 bis 18, dadurch gekennzeichnet, daß das Gemisch bei etwa 5 °C injektiert wird.

20. Verfahren nach einem der Ansprüche 15 bis 19, dadurch gekennzeichnet, daß das Gemisch mit einem Druck von etwa 0,8 bis 1,2 bar injektiert wird.

21. Verfahren nach einem der Ansprüche 15 bis 20, dadurch gekennzeichnet, daß das Gemisch mittels eines Nadelbetts mit 50 bis 200, vorzugsweise 120 Nadeln injektiert wird.

22. Verfahren nach einem der Ansprüche 15 bis 21, dadurch gekennzeichnet, daß das Gemisch unter mehrfachem Einstechen, vorzugsweise drei- bis viermaligem Einstechen des Nadelbetts injektiert wird.

23. Verfahren nach einem der Ansprüche 15 bis 22, dadurch gekennzeichnet, daß ein ein Speisesalz enthaltendes Gemisch injektiert wird.

24. Verfahren nach einem der Ansprüche 15 bis 23, dadurch gekennzeichnet, daß ein etwa 85 Gew.-% Wasser, 12 Gew.-% Speiseöl, 2,5 Gew.-% Speisesalz und 0,5 Gew.-% Emulgator enthaltendes Gemisch injektiert wird.

25. Verfahren nach einem der Ansprüche 15 bis 24, dadurch gekennzeichnet, daß in das Hähnchen etwa 15 Gew.-% Gemisch injektiert werden.

26. Verfahren nach einem der Ansprüche 15 bis 25, dadurch gekennzeichnet, daß das Hähnchen mit einem Oberflächen-Sichtgewürz getumbelt wird.

27. Verfahren nach Anspruch 26, dadurch gekennzeichnet, daß das Hähnchen vor dem Injektieren des Gemischs mit einem Oberflächen-Sichtgewürz getumbelt wird.

28. Verfahren nach einem der Ansprüche 26 oder 27, dadurch gekennzeichnet, daß das Hähnchen mit Speisesalz getumbelt wird.

**Europäisches Patentamt**

# EUROPÄISCHER RECHERCHENBERICHT

Nummer der Anmeldung

**EP 95 10 3374**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-A-19 13 078 (SWIFT & COMPANY)<br><br>* Seite 11, Zeile 3 - Zeile 10 *<br>* Ansprüche 1,7,15 *<br>--- | 1-4,7-9, 12-18, 21-23, 26-28 | A23L1/318 |
| Y | EP-A-0 284 269 (UTAH STATE UNIVERSITY FOUNDATION)<br><br>* Seite 5, Zeile 16 - Zeile 24 *<br>--- | 1-4,7-9, 12-18, 21-23, 26-28 | |
| Y | EP-A-0 181 024 (HESTER INDUSTRIES INC.)<br><br>* Zusammenfassung *<br>--- | 1-4,7-9, 12-18, 21-23, 26-28 | |
| Y | US-A-3 366 491 (DONALD V. SCHWALL ET AL.)<br><br>* Anspruch 1; Abbildungen 2,3 *<br>--- | 1-4,7-9, 12-18, 21-23, 26-28 | |
| A | DE-A-26 39 809 (INOVAN CONSULTING CORP. LTD.)<br>* Ansprüche 1,8 *<br>--- | 1,3,4, 15,17,18 | RECHERCHIERTE SACHGEBIETE (Int.Cl.6)<br><br>A23L<br>A22C<br>A23B |
| A | GB-A-2 049 392 (TOWNSEND ENGINEERING COMPANY)<br>* Abbildungen 3,4 *<br>--- | 7,21 | |
| A | GB-A-2 131 270 (BUXTED POULTRY LIMITED)<br>* Spalte 2, Zeile 101 - Zeile 105 *<br>----- | 10,24 | |

Der vorliegende Recherchenbericht wurde für alle Patentansprüche erstellt

| Recherchenort | Abschlußdatum der Recherche | Prüfer |
|---|---|---|
| BERLIN | 19.Mai 1995 | Alvarez Alvarez, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C08)